Europäisches Patentamt

European Patent Office

Office européen des brevets

(19)

(11) Veröffentlichungsnummer: **0 593 988 A1**

(12) **EUROPÄISCHE PATENTANMELDUNG**

(21) Anmeldenummer: **93116243.2**

(22) Anmeldetag: **07.10.93**

(51) Int. Cl.5: **B05D 7/24**, C04B 41/45, B29C 59/14, C03C 17/28, B05D 5/04

(30) Priorität: **20.10.92 DE 4235300**

(43) Veröffentlichungstag der Anmeldung:
**27.04.94 Patentblatt 94/17**

(84) Benannte Vertragsstaaten:
**AT BE CH DE DK ES FR GB GR IE IT LI LU MC NL PT SE**

(71) Anmelder: **BAYER AG**

**D-51368 Leverkusen(DE)**

(72) Erfinder: **Thurm, Siegfried, Dr.**
**Am Damm 5a**
**D-40668 Meerbusch(DE)**
Erfinder: **Noreiks, Uwe**
**Millingerstrasse 57**
**D-47495 Rheinberg(DE)**
Erfinder: **Schwabe, Peter, Dr.**
**Dudweilerstrasse 17**
**D-51375 Leverkusen(DE)**

(54) **Verfahren zur Hydrophilisierung von Festkörper-Oberflächen.**

(57) Zur Hydrophilisierung einer Festkörper-Oberfläche wird durch elektrische Anregung einer aus einem sauerstoffhaltigen Gas und einem gasförmigen Kohlenwasserstoff bestehenden Gasmischung ein Niederdruckplasma erzeugt, dem die Festkörper-Oberfläche ausgesetzt wird. Als gasförmiger Kohlenwasserstoff wird Allen verwendet. Zusätzlich können der Gasmischung Edelgase zugesetzt werden.

EP 0 593 988 A1

Die Erfindung geht aus von einem Verfahren zur Hydrophilisierung von Festkörper-Oberflächen, bei dem durch elektrische Anregung einer aus einem sauerstoffhaltigen Gas und einem gasförmigen Kohlenwasserstoff bestehenden Gasmischung ein Niederdruckplasma erzeugt wird, dem die Festkörper-Oberfläche ausgesetzt wird.

Gegenstand der Erfindung sind ferner die nach dem erfindungsgemäßen Verfahren erhältlichen, gut benetzbaren Gegenstände. Die Gegenstände können sowohl aus anorganischen (wie z.B. Glas, Metall, Keramik) als auch aus organischen Materialien (z.B. Polymeren) sein. Die Gegenstände können sowohl transparent als auch opak oder lichtundurchlässig sein.

Die nach dem erfindungsgemäßen Verfahren hergestellten Gegenstände besitzen eine hervorragende Benetzbarkeit und neigen dadurch z.B. auch in einer Umgebung mit hoher relativer Feuchte nicht zum Beschlagen. Solche Gegenstände weisen einen niedrigen Kontaktwinkel bei der Benetzung mit Wasser auf und behalten diese Eigenschaft über einen langen Zeitraum.

C.-P. Ho und H. Yasuda beschreiben in der Zeitschrift "Polymeric Materials Science and Engineering", (1985) Band 56, Seite 705 die Behandlung in einem Methan-Plasma.

Die japanische Anmeldung JA 02 074 901 beschreibt die Behandlung von transparenten Gegenständen in einem $O_2$-, $N_2$- oder Ar-Plasma. Die japanische Anmeldung JA 01 300 958 beschreibt die Behandlung von Intraokularlinsen in einer Mischung von Kohlenwasserstoffen, halogenierten Kohlenwasserstoffen, metallorganischen Verbindungen und organischen Silanverbindungen. Die Anmeldung JA 62 239 105 beschreibt die Plasmabehandlung von optischen Teilen in einer Mischung von zwei organischen Gasen. Die Anmeldung JA 58 216 222 beschreibt die Plasmabehandlung von Kontaktlinsen, wobei als Prozeßgase erst Luft und anschließend 1-Vinyl-2-pyrolidon benutzt werden.

In US 3 925 178 wird die Behandlung von Kontaktlinsen in einem Plasma, welches als Prozeßgas Wasserdampf enthält, beschrieben. In GB 2 174 397 wird die Behandlung von Kontaktlinsen aus einem Siloxanacrylat-Copolymeren in einem Plasma beschrieben, welches als Prozeßgas Sauerstoff oder Ar enthält.

In DE 21 51 702 wird die Behandlung von Gegenständen aus Silikonkautschuk in einem Edelgasplasma beschrieben. In DE 27 48 568 wird die Behandlung von Silikon-Kontaktlinsen in einem Plasma beschrieben, wobei als Prozeßgas $O_2$, $N_2$ oder $NH_3$ benutzt wird. DE 28 41 128 beschreibt die Herstellung von Polymer-Kontaktlinsen, wobei die Linse in einem Plasma behandelt wird, welches als Prozeßgase $O_2$, $N_2$, $H_2$ oder $H_2O$ enthält. DE 23 53 495 beschreibt die Behandlung von Polysiloxan-Elastomeren mittels eines Sauerstoffplasmas.

EP 0 152 256 beschreibt die Herstellung von optischen Gegenständen, die eine Plasmabehandlung in einem Gas aus einer Mischung von Sauerstoff und einem Gas mit mindestens einer Doppelbindung erfahren. Es wird eine Vielzahl von Gasen genannt, mit denen das Verfahren durchgeführt werden kann, jedoch werden Allen und Acetylen nicht aufgeführt.

Geeignete Gegenstände, die nach diesem Verfahren eine gute Benetzbarkeit erhalten, sind vorzugsweise transparent oder bestehen z.B. aus Glas oder transparenten anorganischen Verbindungen (wie Quarz, Korund etc.) oder aus transparenten Polymeren (wie Polystyrol, Polyester, Polyethylen, Polypropylen, Polycarbonat, Polymethylmethacrylat, Epoxidharzen, Silikonkautschuk usw). Alle diese Materialien sind bekannt, ebenfalls daraus hergestellte Gegenstände.

Der Aufbau von Anlagen zur Plasmabehandlung von Gegenständen ist literaturbekannt und wird z.B. beschrieben in dem Artikel von A. T. Bell, "Engineering and Economic Aspect of Plasma Chemistry" in Techniques and Application of Plasma Chemistry, Verlag John Wiley and Sons, New York (1974).

Die Plasmabehandlung erfolgt üblicherweise bei reduziertem Druck. Der Druck während der Behandlung liegt zwischen $10^{-3}$ mbar und 10 mbar, wobei der bevorzugte Bereich $1 \times 10^{-2}$ bis 1 mbar beträgt.

Als Maß für die Benetzbarkeit einer Oberfläche wird im allgemeinen der Kontaktwinkel mit Wasser angegeben, wobei die Benetzbarkeit um so besser ist, je kleiner der Kontaktwinkel ist.

Mit den o.g. Verfahren erhält man Kontaktwinkel bis zu 14°. In vielen Fällen wird jedoch ein noch kleinerer Kontaktwinkel gewünscht, um z.B. das Beschlagen von transparenten Oberflächen mit Wasserdampf zu vermeiden.

Aufgabe der Erfindung ist es daher, ein Verfahren zu schaffen, mit welchem Oberflächen mit einem Kontaktwinkel gegen Wasser kleiner 14°, d.h. mit verbesserter Benetzbarkeit erzeugt werden.

Diese Aufgabe wird, ausgehend von dem eingangs beschriebenen Verfahren, erfindungsgemäß dadurch gelöst, daß als gasförmiger Kohlenwasserstoff Allen verwendet wird.

Das Plasma-Gasgemisch kann neben Allen und sauerstoffhaltigen Gasen auch andere Gase enthalten. Bevorzugt werden Edelgase von He, Ne, Ar, Kr oder Xe. Als Sauerstoff enthaltende, anorganische Gase werden $O_2$, $O_3$, $N_2O$, $NO_2$, $CO$, $CO_2$, $H_2O$ etc. zugesetzt. Das Verhältnis der Menge von Allen zu der Menge des sauerstoffhaltigen Gases liegt zwischen 10 und 0,001, bevorzugt zwischen 5 und 0,05.

2

EP 0 593 988 A1

Zur Anregung des Plasmas wird dem Gasgemisch elektrische Energie zugeführt, z.B. durch Anlegung von elektrischer Spannung an eine Elektrode. Dabei kann eine Gleichspannung oder eine hoch- oder niederfrequente Wechselspannung benutzt werden. Bei Benutzung hochfrequenter Wechselspannung liegt der bevorzugte Frequenzbereich zwischen 1 MHz und 10 GHz. Die Gase für die Plasmaerzeugung werden zusammen oder getrennt in der Nähe der Elektrode zugeführt.

Die Prozeßdauer der Behandlung liegt zwischen 10 Sek. und 10 Std., bevorzugt zwischen 1 Min. und 1 Std. In vielen Fällen hat es sich als vorteilhaft erwiesen, die Oberflächen des Substrates zwecks besserer Wirkung der Plasmabehandlung zu reinigen.

Vorteilhaft geschieht dies in einem Plasma, bei dem vorzugsweise Ar oder Sauerstoff als Plasma-Gas verwendet werden. Dazu kann die gleiche Anlage benutzt werden, in der - anschließend an die Reinigung - das erfindungsgemäße Verfahren durchgeführt wird Es können aber auch andere geeignete Gase verwendet werden. Eine besonders gute Gleichmäßigkeit erhält man, wenn die zu behandelnden Gegenstände während der Plasma-Einwirkung relativ zum Plasma bewegt werden, insbesondere wenn sie rotieren.

In den folgenden Beispielen werden folgende Teile dem erfindungsgemäßen Verfahren unterzogen:

A = eine Platte (40 mm x 70 mm) aus Makrolon 2443, einem Bisphenol-A-Homopolycarbonat der Fa. Bayer AG
B = eine Platte aus dem Siliconkautschuk B 500 der Fa. Bayer AG
C = eine Platte aus Polystyrol
D = eine Quarzplatte
E = eine mit Al bedampfte Glasplatte (die Al-Schicht wird erfindungsgemäß behandelt).

Beispiel 1

Die genannten Proben werden in einer Plasma-Behandlungsanlage an einem drehbaren Substrat-Halteteller befestigt. Anschließend wird die Kammer der Behandlungsanlage vakuumdicht verschlossen und auf einen Druck von 1 x 10⁻⁴ mbar evakuiert. Nach Erreichen dieses Druckes wird in die Kammer Ar bis zu einem Druck von 0,1 mbar eingelassen und der Drehantrieb des Substrat-Halters eingeschaltet, so daß dieser mit 20 U/min rotiert. Anschließend wird durch Anlegen einer hochfrequenten Wechselspannung von 27,12 MHz an die Elektrode in der Vorbehandlungskammer der Ar-Gasatmosphäre eine elektrische Leistung von 70 W zugeführt und dadurch ein Plasma gezündet. Nach 5 Min. wird die Wechselspannung abgeschaltet, die Ar-Zufuhr unterbrochen und die Prozeßkammer erneut auf 1 x 10⁻⁴ mbar evakuiert. Sodann wird ein Gemisch aus 8 Teilen Sauerstoff und 4 Teilen Allen in die Behandlungskammer eingelassen, so daß sich ein Druck von 0,1 mbar einstellt.

Durch ein erneutes Anlegen einer Wechselspannung von 27,12 MHz an die Elektrode wird der Gasatmosphäre aus Allen und Sauerstoff eine elektrische Leistung von 70 W zugeführt und dadurch ein Plasma gezündet. Nach 20 Minuten werden die Wechselspannung abgeschaltet, die Behandlungskammer belüftet und die Proben entnommen.

Die nachfolgende Tabelle zeigt den Kontaktwinkel der Proben gegen Wasser vor der Durchführung des erfindungsgemäßen Verfahrens (Nullprobe).

Die Tabelle zeigt weiterhin den Kontaktwinkel der Proben mit Wasser aus dem Beispiel 1. Die erste Zahl zeigt den Kontaktwinkel nach ca. 10 Std., die zweite Zahl den Kontaktwinkel 50 Tage nach der Durchführung des erfindungsgemäßen Verfahrens. Man sieht, daß in allen Fällen der Kontaktwinkel bei den behandelten Proben deutlich kleiner ist als bei den unbehandelten Proben, d.h. das Wasser spreitet und benetzt die Oberfläche nach der Behandlung entsprechend dem erfindungsgemäßen Verfahren besser als ohne diese Behandlung. Außerdem ist aus der Tabelle ersichtlich, daß die Benetzbarkeit über einen langen Zeitraum erhalten bleibt.

3

Tabelle

|  | Kontaktwinkel mit Wasser ($^{\circ}$) | |
|---|---|---|
| Nullprobe | nach 1 Tag | nach 50 Tagen |
| A | 77,0 | |
| B | 103,0 | |
| C | 90 | |
| D | 33 | |
| E | 86 | |
| | | |
| Beispiel 1 | | |
| A | 2 | 6 |
| B | 3 | 5 |
| C | 2 | 6 |
| D | 6 | 8 |
| E | 5 | 8 |

**Patentansprüche**

1. Verfahren zur Hydrophilisierung von Festkörper-Oberflächen, bei dem durch elektrische Anregung einer aus einem sauerstoffhaltigen Gas und einem gasförmigen Kohlenwasserstoff bestehenden Gasmischung ein Niederdruckplasma erzeugt wird, dem die Festkörper-Oberfläche ausgesetzt wird, dadurch gekennzeichnet, daß als gasförmiger Kohlenwasserstoff Allen verwendet wird.

2. Verfahren nach Anspruch 1, dadurch gekennzeichnet, daß der Gasmischung zusätzlich Edelgase zugesetzt werden.

3. Verfahren nach Ansprüchen 1 bis 2, dadurch gekennzeichnet, daß als sauerstoffhaltiges Gas $O_2$, $N_2O$, $SO_2$, CO oder $H_2O$ verwendet wird.

4. Verfahren nach Ansprüchen 1 bis 3, dadurch gekennzeichnet, daß die Festkörper-Oberfläche dem Plasma für die Dauer von 10 Sek. bis 10 Std. ausgesetzt wird.

5. Verfahren nach Anspruch 4, dadurch gekennzeichnet, daß die Festkörper-Oberfläche dem Plasma für die Dauer von 1 Min. bis 60 Min. ausgesetzt wird.

6. Verfahren nach Ansprüchen 1 bis 4, dadurch gekennzeichnet, daß die Festkörper-Oberfläche vor der Plasmabehandlung durch Einwirkung eines Argon- oder Sauerstoffplasmas gereinigt wird.

7. Verfahren nach Ansprüchen 1 bis 6, dadurch gekennzeichnet, daß die Anregung des Plasmas durch eine elektrische Wechselspannung mit einer Frequenz zwischen 0 und 20 GHz erfolgt.

8. Verfahren nach Ansprüchen 1 bis 7, dadurch gekennzeichnet, daß das Mischungsverhältnis zwischen Allen und dem sauerstoffhaltigen Gas zwischen 10 und 0,001 liegt.

9. Verfahren nach Anspruch 8, dadurch gekennzeichnet, daß das Mischungsverhältnis zwischen Allen und dem sauerstoffhaltigen Gas zwischen 5 und 0,05 liegt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | JOURNAL OF POLYMER SCIENCE, POLYMER CHEMISTRY EDITION Bd. 14 , 1976 , NEW YORK US Seiten 195 - 224 H.YASUDA ET AL. 'Plasma polymerization of some organic compounds and properties of the polymers' | 1-5,7-9 | B05D7/24 C04B41/45 B29C59/14 C03C17/28 B05D5/04 |
| Y | * Seite 195, Absatz 2 * * Seite 204, Absatz 1 * * Seite 205 - Seite 206 * --- | 6 | |
| Y | PATENT ABSTRACTS OF JAPAN vol. 9, no. 125 (C-283)(1848) 30. Mai 1985 & JP-A-60 013 065 (STANLEY DENKI K.K.) 23. Januar 1985 * Zusammenfassung * --- | 6 | |
| A | US-A-4 524 089 (HAQUE ET AL.) * das ganze Dokument * --- | 6 | |
| P,A | KUNSTSTOF EN RUBBER Bd. 46, Nr. 5 , Mai 1993 , ROTTERDAM NL Seiten 26 - 29 XP303701 P.J. VAN DER STEEN 'voorbehandelen, coatenn, reinigen oppervlaken: plasma technologie' * Seite 28, Absatz REINIGEN * ----- | 6 | RECHERCHIERTE SACHGEBIETE (Int.Cl.5) C03C B29C C08J C04B B05D |

Der vorliegende Recherchenbericht wurde für alle Patentansprüche erstellt

| Recherchenort | Abschlußdatum der Recherche | Prüfer |
|---|---|---|
| DEN HAAG | 31. Januar 1994 | Brothier, J-A |